# EUROPEAN PATENT SPECIFICATION

(11) **EP 3 139 793 B1**
(45) Date of publication and mention of the grant of the patent: **24.10.2018**
(21) Application number: 15732965.7
(22) Date of filing: 08.05.2015
(51) Int. Cl.: A47B 96/06, A47B 96/14, F16B 12/10

(54) **CONNECTION MEMBER FOR CONNECTING A WALL-ATTACHABLE BODY TO A WALL-MOUNTED BRACKET**
VERBINDUNGSELEMENT ZUR VERBINDUNG EINES AN DER WAND BEFESTIGBAREN KÖRPERS MIT EINER WANDMONTIERTEN KLAMMER
ÉLÉMENT DE RACCORDEMENT SERVANT À RACCORDER UN CORPS, POUVANT ÊTRE FIXÉ AU MUR, À UN SUPPORT MURAL

(30) Priority: 08.05.2014 NL 2012783
(43) Date of publication of application: 15.03.2017
(73) Proprietor: Fetim B.v., 1047 BP Amsterdam (NL)
(72) Inventor: ZONNEVELD, Thomas Gerardus Petrus, NL-1047 BP Amsterdam (NL)
(74) Representative: Nederlandsch Octrooibureau
(86) International application number: PCT/NL2015/050315
(87) International publication number: WO 2015/170981

(56) References cited:
- EP-A1- 0 488 697
- BE-A3- 1 020 453
- GB-A- 1 546 432

## Description

### Field of the invention

The present invention relates to a connection member for connecting a wall-attachable body to a wall-mounted bracket as well as a wall-mounted assembly comprising such a connection member.

### Background of the invention

It is known to provide a wall-attachable body, such as a floating shelf, with one or more elongated holes and to subsequently slide the wall-attachable body over one or more elongated projection members of a wall-mounted bracket in order to mount the wall-attachable body to the wall.

For instance, EP 0488697 describes a shelving assembly which includes a shelf and a mounting member, a portion of which is received by and extends within an opening in the edge of the shelf. A friction bush is provided to resist relative movement between the shelf and the mounting member and comprises a sleeve having an internal surface and an external surface and is sized so as to be received upon that portion of the mounting member which is in turn received within the edge of the shelf. The sleeve is provided with a first means on the internal surface to mate with cooperating means provided on that portion of the mounting member that receives the sleeve and second means on the external surface to engage within the opening in edge of the shelf.

A disadvantage of the known assemblies, however, is that rattling and unwanted movement may occur due to the one or more elongated projection members not providing a perfect fit with the elongated holes. In some situations, the wall-attachable body can easily be slid off the projection members without much effort. This is highly undesirable, especially when the wall-attachable body is relatively heavy or when the wall-attachable body is a shelf or the like used to support heavy objects, such as books.

Attempts have been made to create another hole in the wall-attachable body perpendicular to the elongated hole for receiving a screw, pen or the like therein. The screw is used to engage the elongated projection member in order to at least prevent movement of the wall-attachable body in a longitudinal direction of the one or more projection members, i.e. to prevent the wall-attachable body from sliding off the projection members.

The problem of rattling, i.e. movement of the wall-attachable body in a direction perpendicular to the projection members, however, still exists.

It is therefore an object of the present invention to provide a connection member capable of preventing the wall-attachable body from sliding off the projection members of the wall-mounted bracket and at the same time being capable of preventing or at least minimizing the problem of rattling.

EP 2177129 describes general state of the art, disclosing a fastening device to fasten a shelf to the frame of a piece of furniture, comprising an anchoring body conformed to be inserted into a corresponding seat formed in the edge of the shelf and a pin member housable in an internal cavity of the anchoring body and slideable in it along an axis between two positions.

DE 202008015732 and DE 102009031101 also both describe general state of the art, disclosing a connection system for connecting a lightweight shelf to another lightweight shelf or a wall plate.

### Summary of the invention

Hereto, according to the invention, a connection member and a wall-mountable bracket provided with an elongated projection member provided for connecting a
wall-attachable body, having an elongated hole for receiving the connection member, to the wall-mountable bracket during use projecting away from a mounting wall along a projection member axis, the projection member therein being insertable into an insertion space of the connection member through an insertion opening,
the connection member comprising:
an elongated, tubular body having a tubular wall comprising the insertion space, the tubular wall and the insertion space extending along a connection member axis alignable with the projection member axis when the projection member is inserted into the connection member,
   wherein the tubular body, when viewed along the connection member axis in a direction away from the mounting wall, comprises a proximal end zone, provided with the insertion opening, an intermediate zone and a distal end zone,
   wherein an inner diameter of the tubular wall in the proximal end zone and the distal end zone is equal to or larger than an outer diameter of the projection member, wherein the intermediate zone is provided with slits extending parallel to the connection member axis, the slits dividing the tubular wall in the intermediate zone into multiple, elongated wall segments, the elongated wall segments being made of a resilient material,
   wherein a radial wall thickness of the elongated segments is so chosen that,
when the projection member is not inserted into the connection member, an inner diameter of the tubular wall in the intermediate zone is smaller than the outer diameter of the projection member, whereas,
when the projection member is inserted into the insertion space, the elongated segments are pushed outwardly in radial direction by the projection member, wherein an outer diameter of the segments is equal to an outer diameter of the tubular wall in the proximal end zone and the distal end zone, wherein the tubular wall has a constant-diameter outer contact surface when viewed along the connection member axis, wherein the outer surface of the connection member engages the wall-attachable body in a clamping manner.

The above-described connection member substantially reduces the problem of unwanted movement of the wall-attachable body with respect to the elongated projection members, both in longitudinal as well as radial direction. The resilient, elongated segments of the intermediate zone provide a firm connection between both the projection member and the connection member and between the connection member and the wall-attachable body.

At the same time, however, the resilient, elongated segments advantageously allow the removal of the connection member out of the elongated hole of the wall-attachable body, if desired.

An embodiment relates to an aforementioned connection member, wherein the length of the intermediate zone is 1-10 cm, preferably 2-6 cm, more preferably 3-5 cm. The inventors have found that this length range provides optimal grip between both the projection member and the connection member and between the connection member and the wall-attachable body. I.e. not too much grip as to make removal of the connection member overly difficult, and not too little grip as to allow unwanted movement of the connection member.

An embodiment relates to an aforementioned connection member, wherein the length of the tubular body is 1-15 cm, preferably 3-10 cm, more preferably 5-9 cm, most preferably 8 cm. This length range of the tubular body allows it to be used with a wide range of wall-attachable bodies, while still preventing unwanted movement.

An embodiment relates to an aforementioned connection member, wherein the elongated, tubular body has a cylindrical shape. The cylindrical shape allows for easy insertion and even distribution of in particular radial forces.

An embodiment relates to an aforementioned connection member, wherein the amount of slits is 3-8, preferably 4-6, most preferably 6, wherein the slits are evenly distributed in circumferential direction. Such an amount of slits provides a relatively optimal balance between resiliency of the elongated segments in the intermediate zone and constructional strength of the intermediate zone itself.

An embodiment relates to an aforementioned connection member, wherein the proximal end zone is provided with a flange extending perpendicularly to the connection member axis. Such a flange prevents the connection member from being inserted too far into the elongated hole in the wall-attachable body. At the same time the flange facilitates removal of the connection member from the hole, if desired.

An embodiment relates to an aforementioned connection member, wherein the flange projects with respect to the proximal end zone over a distance of 1-5 mm, such as 2-4 mm, for instance 3 mm. In practice, the inventors have found that such a flange width provides a good balance between allowing the connection member to be grabbed easily for removal on the one hand and ease of handling, storability and aesthetics on the other hand.

An embodiment relates to an aforementioned connection member, wherein the proximal and distal end zones of the tubular body have an outer diameter of 1-3 cm, preferably 1,4 - 2,6 cm, most preferably 2,2 cm. Especially for wall-attachable bodies having a relatively small height, such as shelves, in particular floating shelves, having a commonly used height of for instance 5-10 cm, such a diameter is found to be beneficial: the structural integrity of the shelf is hardly compromised, while at the same time still sufficient outer contact surface for the tubular body is realized.

An embodiment relates to an aforementioned connection member, wherein an outer circumference of the proximal end zone is provided with a plurality of ribs extending parallel to the connection member axis, the ribs being evenly distributed in circumferential direction. These ribs allow a firmer grip of the outer circumference of the proximal end zone of the plug with the hole in the wall-attachable body. This is especially useful if the connection member has been removed from, and reinserted in, the same hole multiple times.

An embodiment relates to an aforementioned connection member, wherein wherein the width of the slits is approximately 1-3 mm, such as 2 mm. This slit width also provides a relatively optimal balance between resiliency of the elongated segments in the intermediate zone and constructional strength of the intermediate zone itself.

Another aspect of the invention relates to a subassembly of a wall-attachable body and a connection member according to any one of the preceding claims, the connection member being received into the elongated hole of the wall-attachable body. This subassembly can easily be slid, as a whole, over the one or more elongated projection members.

An embodiment relates to an aforementioned subassembly, wherein the wall-attachable body is a floating shelf having a main support surface for supporting objects and one or more side surfaces, wherein the elongated hole is provided in one of the side surfaces, the connection member being received in the elongated hole.

An embodiment relates to an aforementioned subassembly, wherein the side surface is provided with a plurality of elongated holes, such as 2, evenly spaced-apart over the side surface, for receiving a plurality of connection members therein. This allows forces exerted on the wall-attachable body to be distributed evenly over the connection members and ultimately over the elongated projection members of the wall-mounted bracket.

Another aspect of the invention relates to a wall-mounted assembly of a wall-mounted bracket provided with an elongated projection member projecting away from a mounting wall along a projection member axis, and an aforementioned subassembly, the projection member being inserted into the insertion space of the connection member.

An embodiment relates to an aforementioned wall-mounted assembly, wherein the wall-attachable body is provided with a plurality of elongated holes, such as 2, receiving a plurality of connection members therein, and a plurality of elongated projection members being inserted into the plurality of connection members. As stated before, this guarantees optimal distribution of forces over the connection members, and the projection members.

Another aspect of the invention relates to a method for mounting a wall-attachable body to a wall-mounted bracket on a mounting wall, the wall-attachable body comprising an elongated hole for receiving an aforementioned connection member, the wall-mounted bracket being provided with an elongated projection member projecting away from the mounting wall along a projection member axis, the projection member therein being insertable into the insertion space of the connection member through the insertion opening, comprising the steps of:
- inserting the distal end zone of the connection member into the elongated hole of the wall-attachable body until the proximal end zone is fully inserted into the elongated hole, to obtain an aforementioned subassembly,
- inserting the elongated projection member into the insertion space of the connection member of the subassembly through the insertion opening,
- moving the subassembly in the direction of the wall over the projection member until a firm fit is provided between the projection member and the wall-mounted bracket on the one hand and the subassembly on the other hand, to obtain the aforementioned wall-mounted assembly, wherein the outer surface of the connection member engages the wall-attachable body in a clamping manner.

### Brief description of the drawings

Embodiments of a connection member, an aforementioned subassembly and a wall-mounted assembly according to the invention will by way of non-limiting example be described in detail with reference to the accompanying drawings. In the drawings:
Figure 1 shows an overview of a subassembly of a wall-attachable body and embodiments of connection members according to the invention being arranged therein for attachment to a wall-mountable bracket,
Figure 2 shows a detailed view of the insertion opening of the subassembly of figure 1,
Figure 3 shows a perspective view of an embodiment of a connection member according to the invention, and
Figure 4 shows a view of a longitudinal cross-section of the connection member of figure 3.

### Detailed description of the invention

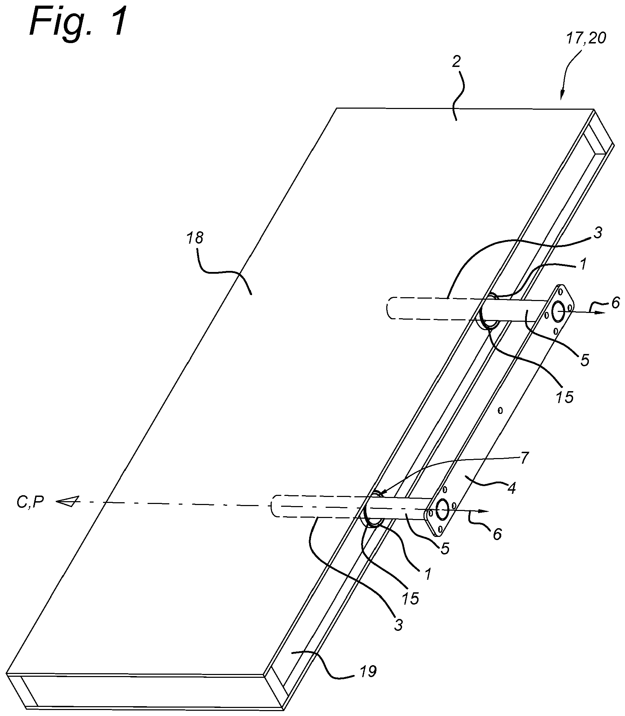

Figure 1 shows a subassembly 17 of a wall-attachable body in the form of a floating shelf 2 and a connection member in the form of a plug 1 according to the invention. Before attaching the subassembly 17 to a wall-mounted bracket 4 to form a final wall-mounted assembly 20, the plug 1 is received into an elongated hole 3 of the floating shelf 2. Figure 1 shows two of such holes 3 are provided along with two plugs 1 and two projection members in the form of rods 5 for insertion into insertion openings 7 of the plugs 1 upon final assembly. Other combinations and amounts of holes/plugs/projecting rods are of course also conceivable.

The floating shelf 2 has an upper and a lower (not shown) main surface 18. The upper main surface 18 can be used for supporting objects, such as books, dishes, cutlery, et cetera, and one or more side surfaces 19. The elongated holes 3 are provided in one of the side surfaces 19, in particular the side surface 19 adjoining the wall 6. Please note that the wall 6 is not shown, but its position is schematically indicated by arrows provided with the reference numeral 6. The wall-mounted bracket 4 has a base plate that is to be connected to the wall 6, e.g. with screws, such as four screws arranged in the base plate near each projecting rod 5. The wall-mounted bracket 4 is preferably mounted to the wall 6 before arrangement of the subassembly 17 thereon. The wall 6 is usually a vertical wall with the floating shelf 2 consequently extending in a horizontal direction, but it is conceivable that the wall has a slight angle with respect to the vertical.

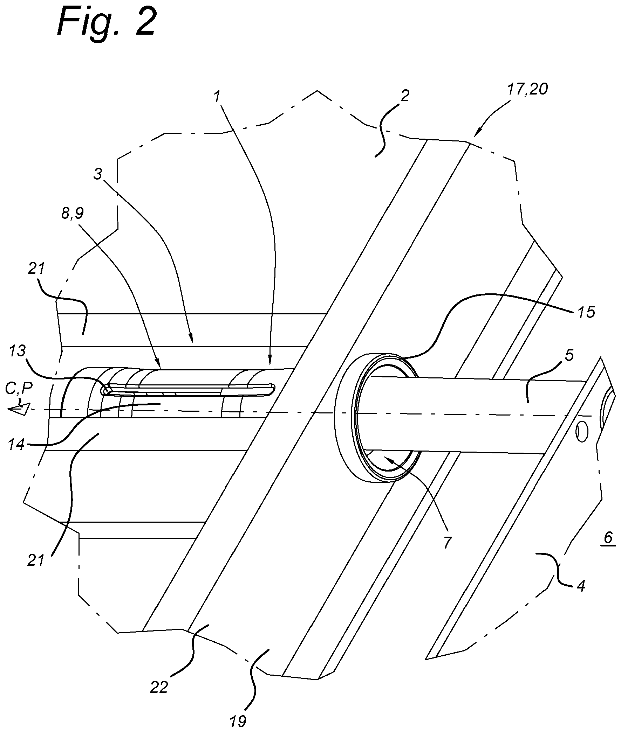

In this exemplary embodiment, the construction of the floating shelf 2 comprises two opposing main surfaces 18 and four side surfaces 19 connecting the main surfaces 18. The floating shelf 2 may have a height of for instance 3-10 cm, such as 5 cm. The width of the floating shelf 2, i.e. when looking at the wall (with the shelf 2 attached) in a direction perpendicular thereto, may for example be 50-200 cm, such as 80-150 cm, for instance 100 cm. The floating shelf 2 is preferably hollow to save weight. The elongated holes 3 may then be formed by two elongated, parallel, opposing frame members (indicated with reference numeral 21 in figure 2) extending inside the floating shelf 2 to delimit the hole 3. The frame members are arranged between the main support surfaces 18. The floating shelf 2 may be made of wood, such as MDF-cardboard.

The longitudinal axes of the plug 1 and the projecting rod 5 are respectively indicated by the letters C and P.

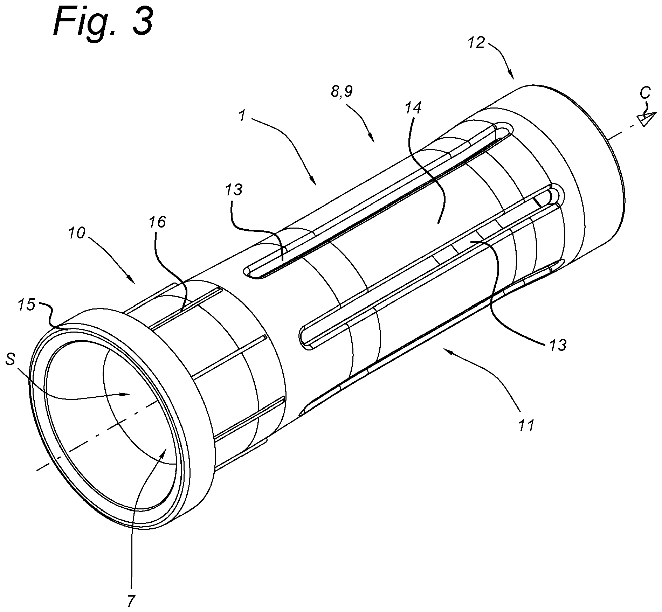

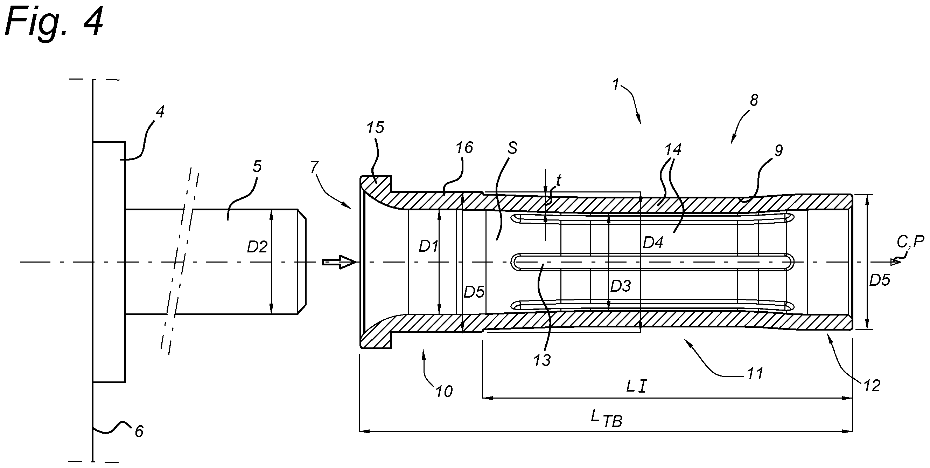

Figure 2 shows a detailed view of the region around the insertion opening 7 of the subassembly 17 of figure 1. The pair of frame members 21 can be clearly seen. It can also be seen that the plug 1 is provided with a flange 15. The side surface 19 that is to adjoin the wall 6 is comprised by a frame member 22. Preferably, the plug 1 has a tubular body 8 having a tubular wall 9. The tubular wall 9 is partially provided with elongated, longitudinal slits 13 to form elongated segments 14 between the slits 13. A more detailed description of the slits 13 and the segments 14 will be provided with reference to figures 3 and 4.

Figure 3 shows a perspective view of an embodiment of the plug 1 according to the invention and figure 4 shows a view of a longitudinal cross-section of the plug 1 of figure 3.

The insertion opening 7 gives access to a hollow insertion space S delimited by the tubular plug wall 9. Both the tubular wall 9 and the insertion space S extend along the connection member axis C. The connection member axis C is alignable with the projection member axis P when the projecting member 15 is inserted into the insertion space S of the plug 1.

The tubular body 8, when viewed along the connection member axis C comprises a proximal end zone 10, provided with the insertion opening 7, an intermediate zone 11 and a distal end zone 12.

Referring now to figure 4, an inner diameter D1 of the tubular wall 9 in the proximal end zone 10 and the distal end zone 12 is equal to or larger than an outer diameter D2 of the projecting rod 5.

The intermediate zone is provided with slits 13 extending parallel to the connection member axis C. The slits 13 divide the tubular wall 9 in the intermediate zone 11 into multiple, elongated wall segments 14. The elongated wall segments 14 are to be made of a resilient material, such as plastic, for instance ABS. The other plug parts can also be made of the same material. However, the use of wood for producing the plug 1 is of course also conceivable. If plastic is used, the plug 1 can be conveniently produced with the help of 3D-printing technology.

The radial wall thickness t of the elongated segments 14 is so chosen that, when the projecting rod 5 is not inserted into the plug 1, an inner diameter D3 of the tubular wall 9 in the intermediate zone 11 is smaller than the outer diameter D2 of the projecting rod 15. However, when the projecting rod 5 is inserted into the insertion space S, the elongated segments 14 must be allowed to be pushed outwardly in radial direction by the projecting rod 5. Therein, an outer diameter D4 of the segments 14 is equal to an outer diameter D5 of the tubular wall 9 in the proximal end zone 10 and the distal end zone 12, such that the tubular wall 9 has a constant-diameter outer contact surface when viewed along the connection member axis C. This relatively continuous and smooth outer contact surface engages the (construction/materials delimiting the) hole 3 when the projecting rod 15 is inserted. The absence of (possibly sharp) protrusions on the outer surface prevents damage to the construction/materials used to form the hole 3. This allows the plug 1 to be inserted, removed and re-inserted again without substantial damage.

The length L1 of the intermediate zone 11 is for example 1-10 cm, preferably 2-6 cm, more preferably 3-5 cm. The length LTB of the tubular body 8 is for instance 1-15 cm, preferably 3-10 cm, more preferably 5-9 cm, most preferably 8 cm. Preferably, the elongated, tubular body 8 has a cylindrical shape.

The amount of slits 13 is for example 3-8, preferably 4-6, most preferably 6. The slits 3 are preferably evenly distributed in circumferential direction. The width of the slits 13 preferably is approximately 1-3 mm, such as 2 mm.

As stated before, the proximal end zone 10 is preferably provided with a flange 15 extending perpendicularly to the connection member axis C. The flange 15 may project with respect to the proximal end zone 10 over a distance of 1-5 mm, such as 2-4 mm, for instance 3 mm. The proximal 10 and distal 12 end zones of the tubular body 8 may have an outer diameter D5 of 1-3 cm, preferably 1,4 - 2,6 cm, most preferably 2,2 cm.

The outer circumference of the proximal end zone 10 can be provided with a plurality of ribs 16 extending parallel to the connection member axis C, the ribs 16 being evenly distributed in circumferential direction. The ribs 16 preferably have a relatively small radial height of for instance 0,1-0,5 mm.

The insertion opening 7 is preferably chamfered or rounded to facilitate positioning of the plug 1 on the projecting rod 5. Additionally, another opening may be provided at the distal end 12 to allow the projecting rod 5 to be inserted further into the insertion space S, if desired. The outer surface of the plug 1 may be provided with a texture or the like to improve grip. Preferably, the inner surface of the plug 1 is so formed as to require a force of 20-25 N to slide the plug 1 onto the projecting rod 5.

As stated before, the final assembly 20 can be realized by the steps of:
- inserting the distal end zone 12 of the plug 1 into the elongated hole 3 of the floating shelf 2 until the proximal end zone 10 is fully inserted into the elongated hole 3, to obtain the subassembly 17,
- inserting the elongated projection rod 5 into the insertion space S of the plug 1 of the subassembly 17 through the insertion opening 7,
- moving the subassembly 17 in the direction of the wall 6 over the projecting rod 5 until a firm fit is provided between the projecting rod 5 and the wall-mounted bracket 4 on the one hand and the subassembly 17 on the other hand, to obtain the wall-mounted assembly 20.

Thus, the invention has been described by reference to the embodiments discussed above. It will be recognized that these embodiments are susceptible to various modifications and alternative forms well known to those of skill in the art without departing from the scope of the invention as defined in the appended claims. Accordingly, although specific embodiments have been described, these are examples only and are not limiting upon the scope of the invention. It is conceivable, for instance, that the connection member is used for other connection purposes, such as for connecting a first object, such as a piece of furniture, to a second object, wherein the first object is provided with the elongated hole for receiving the connection member and the second object is provided with the projecting member (via an intermediate bracket comprising the projecting member).

### Reference numerals

- 1.: Plug
- 2.: Floating shelf
- 3.: Hole in floating shelf
- 4.: Wall-mounted bracket
- 5.: Projecting rod
- 6.: Mounting wall
- 7.: Insertion opening
- 8.: Tubular body
- 9.: Tubular wall
- 10.: Proximal end zone
- 11.: Intermediate zone
- 12.: Distal end zone
- 13.: Slit
- 14.: Elongated wall segment
- 15.: Flange
- 16.: Rib
- 17.: Subassembly of shelf and plug
- 18.: Support surface of shelf
- 19.: Side surface of shelf
- 20.: Wall-mounted assembly
- 21.: Hole side member
- 22.: Shelf frame member

- P =: projecting rod axis
- S =: insertion space
- C =: plug axis

- D1 =: inner diameter of tubular wall
- D2 =: outer diameter of projecting rod
- D3 =: inner diameter of tubular wall in intermediate zone
- D4 =: outer diameter of the segments in the in the intermediate zone with plug inserted
- D5 =: outer diameter of tubular wall in proximal and distal end zone

- LI =: length of intermediate zone
- LTB =: length of tubular body

- t =: radial wall thickness of wall segments

## Claims

1. Connection member (1) and a wall-mountable bracket (4) provided with an elongated projection member (5) for connecting a
wall-attachable body (2), having an elongated hole (3) for receiving the connection member, to the
wall-mountable bracket (4) during use projecting away from a mounting wall (6) along a projection member axis (P), the projection member therein being insertable into an insertion space (S) of the connection member through an insertion opening (7),
the connection member comprising:
an elongated, tubular body (8) having a tubular wall (9) comprising the insertion space,
the tubular wall and the insertion space extending along a connection member axis (C) alignable with the projection member axis when the projection member is inserted into the connection member,
wherein the tubular body, when viewed along the connection member axis in a direction away from the mounting wall, comprises a proximal end zone (10), provided with the insertion opening, an intermediate zone (11) and a distal end zone (12),
wherein an inner diameter (D1) of the tubular wall in the proximal end zone and the distal end zone is equal to or larger than an outer diameter (D2) of the projection member, wherein the intermediate zone is provided with slits (13) extending parallel to the connection member axis, the slits dividing the tubular wall in the intermediate zone into multiple, elongated wall segments, the elongated wall segments (14) being made of a resilient material, wherein a radial wall thickness (t) of the elongated segments is so chosen that,
when the projection member is not inserted into the connection member, an inner diameter (D3) of the tubular wall in the intermediate zone is smaller than the outer diameter (D2) of the projection member, whereas,
when the projection member is inserted into the insertion space, the elongated segments are pushed outwardly in radial direction by the projection member, wherein an outer diameter (D4) of the segments is equal to an outer diameter (D5) of the tubular wall in the proximal end zone and the distal end zone, wherein the tubular wall has a constant-diameter outer contact surface, when viewed along the connection member axis (C), wherein the outer surface engages the wall-attachable body in a clamping manner.

2. Connection member (1) according to claim 1, wherein the length (L1) of the intermediate zone (11) is 1-10 cm, preferably 2-6 cm, more preferably 3-5 cm.

3. Connection member (1) according to claim 1 or 2, wherein the length (LTB) of the tubular body is 1-15 cm, preferably 3-10 cm, more preferably 5-9 cm, most preferably 8 cm.

4. Connection member (1) according to any one of the preceding claims, wherein the elongated, tubular body has a cylindrical shape.

5. Connection member (1) according to any one of the preceding claims, wherein the amount of slits (13) is 3-8, preferably 4-6, most preferably 6, wherein the slits are evenly distributed in circumferential direction.

6. Connection member (1) according to any one of the preceding claims, wherein the proximal end zone (10) is provided with a flange (15) extending perpendicularly to the connection member axis.

7. Connection member (1) according to claim 6, wherein the flange projects with respect to the proximal end zone over a distance of 1-5 mm, such as 2-4 mm, for instance 3 mm.

8. Connection member (1) according to any one of the preceding claims, wherein the proximal and distal end zones of the tubular body have an outer diameter (D5) of 1-3 cm, preferably 1,4 - 2,6 cm, most preferably 2,2 cm.

9. Connection member (1) according to any one of the preceding claims, wherein the outer circumference of the proximal end zone is provided with a plurality of ribs (16) extending parallel to the connection member axis, the ribs being evenly distributed in circumferential direction.

10. Connection member (1) according to any one of the preceding claims, wherein the width of the slits is approximately 1-3 mm, such as 2 mm.

11. Subassembly (17) of a wall-attachable body (2) and a connection member (1) according to any one of the preceding claims, the connection member being received into the elongated hole (3) of the wall-attachable body.

12. Subassembly (17) according to claim 11, wherein the wall-attachable body (2) is a floating shelf (2) having a main support surface (18) for supporting objects and one or more side surfaces (19), wherein the elongated hole (3) is provided in one of the side surfaces, the connection member being received in the elongated hole.

13. Subassembly (17) according claim 12, wherein the side surface is provided with a plurality of elongated holes (3), such as 2, evenly spaced-apart over the side surface, for receiving a plurality of connection members (1) therein.

14. Wall-mounted assembly (20) of a wall-mounted bracket (4) provided with an elongated projection member (5) projecting away from a mounting wall along a projection member axis (P), and a subassembly (17) according to any one of the claims 11-13, the projection member (5) being inserted into the insertion space (S) of the connection member (1), wherein the outer surface of the connection member engages the wall-attachable body in a clamping manner.

15. Wall-mounted assembly (20) according to claim 14, wherein the wall-attachable body (2) is provided with a plurality of elongated holes, such as 2, receiving a plurality of connection members therein, and a plurality of elongated projection members being inserted into the plurality of connection members.

16. Method for mounting a wall-attachable body (2) to a wall-mounted bracket (4) on a mounting wall (6), the wall-attachable body comprising an elongated hole (3) for receiving a connection member (1) according to any one of the claims 1-10, the wall-mounted bracket being provided with an elongated projection member (5) projecting away from the mounting wall along a projection member axis (P), the projection member therein being insertable into the insertion space (S) of the connection member through the insertion opening (7), comprising the steps of:
- inserting the distal end zone (12) of the connection member into the elongated hole of the wall-attachable body until the proximal end zone (10) is fully inserted into the elongated hole, to obtain a subassembly (17) according to any one of the claims 11-13,
- inserting the elongated projection member (5) into the insertion space (S) of the connection member (1) of the subassembly (17) through the insertion opening (7),
- moving the subassembly (17) in the direction of the wall (6) over the projection member until a firm fit is provided between the projection member and the wall-mounted bracket on the one hand and the subassembly (17) on the other hand, to obtain the wall-mounted assembly (20) according to claim 14 or 15, wherein the outer surface of the connection member engages the wall-attachable body in a clamping manner.

## Patentansprüche

1. Verbindungselement (1) und wandmontierbarer Halter (4), der mit einem länglichen Vorsprung (5) versehen ist, um
einen an der Wand befestigbaren Körper (2), der eine längliche Öffnung (3) zum Aufnehmen des Verbindungselements hat, mit dem
wandmontierbaren Halter (4) zu verbinden, der in Benutzung weg von einer Montagewand (6) entlang einer Vorsprungsachse (P) vorsteht, wobei der Vorsprung durch eine Einführöffnung (7) in einen Einführraum (S) des Verbindungselements einführbar ist, wobei das Verbindungselement aufweist:
einen länglichen röhrenförmigen Körper (8) mit einer röhrenförmigen Wand (9), die den Einführraum umfasst,
wobei die röhrenförmige Wand und der Einführraum sich entlang einer Verbindungselementachse (C) erstrecken, die mit der Vorsprungsachse ausrichtbar ist, wenn der Vorsprung in das Verbindungselement eingeführt ist,
wobei der röhrenförmige Körper, wenn er entlang der Verbindungselementachse in einer Richtung weg von der Montagewand betrachtet wird, eine proximale Endzone (10), die mit der Einführöffnung versehen ist, eine mittlere Zone (11) und eine distale Endzone (12) aufweist,
wobei ein Innendurchmesser (D1) der röhrenförmigen Wand in der proximalen Endzone und der distalen Endzone größer oder gleich einem Außendurchmesser (D2) des Vorsprungs ist, wobei die mittlere Zone mit Schlitzen (13) versehen ist, die parallel zur Verbindungselementachse verlaufen, wobei die Schlitze die röhrenförmige Wand in der mittleren Zone in eine Mehrzahl von länglichen Wandsegmenten teilen, wobei die länglichen Wandsegmente (14) aus einem elastischen Material hergestellt sind, wobei eine radiale Wanddicke (t) der länglichen Wandsegmente so gewählt ist, dass,
wenn der Vorsprung nicht in das Verbindungselement eingeführt ist, ein Innendurchmesser (D3) der röhrenförmigen Wand in der mittleren Zone kleiner als der Außendurchmesser (D2) des Vorsprungs ist, wohingegen,
wenn der Vorsprung in den Einführraum eingeführt ist, die länglichen Segmente durch den Vorsprung radial nach außen gedrückt sind, wobei ein Außendurchmesser (D4) der Segmente gleich einem Außendurchmesser (D5) der röhrenförmigen Wand in der proximalen Endzone und der distalen Endzone ist, wobei die röhrenförmige Wand eine äußere Kontaktfläche mit konstantem Durchmesser hat, wenn sie entlang der Verbindungselementachse (C) betrachtet wird, wobei die äußere Oberfläche den wandmontierbaren Körper in klemmender Weise festhält.

2. Verbindungselement (1) nach Anspruch 1, wobei die Länge (L1) der mittleren Zone (11) 1 - 10 cm, vorzugsweise 2 - 6 cm, noch bevorzugter 3 - 5 cm ist.

3. Verbindungselement (1) nach Anspruch 1 oder 2, wobei die Länge (LTB) des röhrenförmigen Körpers 1 - 15 cm, vorzugsweise 3 - 10 cm, noch bevorzugter 5 - 9 cm, am meisten bevorzugt 8 cm ist.

4. Verbindungselement (1) nach einem der vorhergehenden Ansprüche, wobei der längliche röhrenförmige Körper eine zylindrische Form hat.

5. Verbindungselement (1) nach einem der vorhergehenden Ansprüche, wobei die Anzahl von Schlitzen (13) 3 - 8, vorzugsweise 4 - 6, am meisten bevorzugt 6 beträgt, wobei die Schlitze in Umfangsrichtung gleichmäßig verteilt sind.

6. Verbindungselement (1) nach einem der vorhergehenden Ansprüche, wobei die proximale Endzone (10) mit einem Flansch (15) versehen ist, der senkrecht zu der Verbindungselementachse verläuft.

7. Verbindungselement (1) nach Anspruch 6, wobei der Flansch in Bezug auf die proximale Endzone um einen Abstand von 1 - 5 mm, wie etwa 2 - 4 mm, beispielsweise 3 mm vorsteht.

8. Verbindungselement (1) nach einem der vorhergehenden Ansprüche, wobei die proximalen und distalen Endzonen des röhrenförmigen Körpers einen Außendurchmesser (D5) von 1 - 3 cm, vorzugsweise 1,4 - 2,6 cm, am meisten bevorzugt 2,2 cm haben.

9. Verbindungselement (1) nach einem der vorhergehenden Ansprüche, wobei der äußere Umfang der proximalen Endzone mit einer Mehrzahl von Rippen (16) versehen ist, die parallel zu der Verbindungselementachse verlaufen, wobei die Rippen in Umfangsrichtung gleichmäßig verteilt sind.

10. Verbindungselement (1) nach einem der vorhergehenden Ansprüche, wobei die Breite der Schlitze etwa 1 - 3 mm, beispielsweise 2 mm beträgt.

11. Unterbaugruppe (17) eines an einer Wand befestigbaren Körpers (2) und eines Verbindungselements (1) nach einem der vorhergehenden Ansprüche, wobei das Verbindungselement in der länglichen Öffnung (3) des an einer Wand befestigbaren Körpers aufgenommen ist.

12. Unterbaugruppe (17) nach Anspruch 11, wobei der an einer Wand befestigbare Körper (2) ein hängender Regalboden (2) ist, der eine Hauptauflagefläche (18) zum Tragen von Gegenständen und eine oder mehrere Seitenflächen (19) hat, wobei die längliche Öffnung (3) in einer der Seitenflächen vorhanden ist, wobei das Verbindungselement in der länglichen Öffnung aufgenommen ist.

13. Unterbaugruppe (17) nach Anspruch 12, wobei die Seitenfläche mit einer Mehrzahl von länglichen Öffnungen (3), etwa mit zwei länglichen Öffnungen versehen ist, die über die Seitenfläche gleichmäßig beabstandet sind, um eine Mehrzahl von Verbindungselementen (1) darin aufzunehmen.

14. Wandmontierbarer Aufbau (20) eines wandmontierten Halters (4), der mit einem länglichen Vorsprung (5), welcher weg von einer Montagewand entlang einer Vorsprungsachse (P) vorsteht, und einer Unterbaugruppe (17) nach einem der Ansprüche 11-13 versehen ist, wobei der Vorsprung (5) in den Einführraum (S) des Verbindungselements (1) eingeführt ist, wobei die Außenfläche des Verbindungselements den an einer Wand befestigbaren Körper in klemmender Weise festhält.

15. Wandmontierbarer Aufbau (20) nach Anspruch 14, wobei der an einer Wand befestigbare Körper (2) mit einer Mehrzahl von länglichen Öffnungen, wie etwa mit zwei Öffnungen, versehen ist, die eine Mehrzahl von Verbindungselementen darin aufnehmen, und wobei eine Mehrzahl von länglichen Vorsprüngen in die Mehrzahl von Verbindungselementen eingeführt sind.

16. Verfahren zum Montieren eines an einer Wand befestigbaren Körpers (2) an einem wandmontierten Halter (4) an einer Montagewand (6), wobei der an einer Wand befestigbare Körper eine länglichen Öffnung (3) zum Aufnehmen eines Verbindungselements nach einem der Ansprüche 1-10 aufweist, wobei der wandmontierte Halter mit einem länglichen Vorsprung (5) versehen ist, der von der Montagewand weg entlang einer Vorsprungsachse (P) vorsteht, wobei der Vorsprung durch die Einführöffnung (7) in den Einführraum (S) des Verbindungselements einführbar ist, mit den Schritten:
Einführen der distalen Endzone (12) des Verbindungselements in die längliche Öffnung des an einer Wand befestigbaren Körpers, bis die proximale Endzone (10) vollständig in die längliche Öffnung eingeführt ist, um eine Unterbaugruppe (17) nach einem der Ansprüche 11-13 zu erhalten,
Einführen des länglichen Vorsprungs (5) durch die Einführöffnung (7) in den Einführraum (S) des Verbindungselements (1),
Bewegen der Unterbaugruppe (17) in die Richtung der Wand (6) über den Vorsprung, bis ein fester Sitz zwischen dem Vorsprung und dem wandmontierten Halter auf der einen Seite und der Unterbaugruppe (17) auf der anderen Seite hergestellt ist, um den wandmontierten Aufbau (20) nach Anspruch 14 oder 15 zu erhalten, wobei die Außenfläche des Verbindungselements den an einer Wand befestigbaren Körper in klemmender Weise festhält.

## Revendications

1. Élément de raccordement (1) et support pouvant être monté sur un mur (4) prévu avec un élément de saillie allongé (5) pour raccorder un corps pouvant être fixé au mur (2), ayant un trou allongé (3) pour recevoir l'élément de raccordement, au support pouvant être monté sur un mur (4) pendant l'utilisation, faisant saillie à distance d'un mur de montage (6) le long d'un axe d'élément de saillie (P), l'élément de saillie pouvant être inséré dans un espace d'insertion (S) de l'élément de raccordement à travers une ouverture d'insertion (7), l'élément de raccordement comprenant :
un corps tubulaire allongé (8) ayant une paroi tubulaire (9) comprenant l'espace d'insertion,
la paroi tubulaire et l'espace d'insertion s'étendant le long d'un axe d'élément de raccordement (C) pouvant s'aligner avec l'axe d'élément de saillie lorsque l'élément de saillie est inséré dans l'élément de raccordement,
dans lequel le corps tubulaire, lorsqu'il est observé le long de l'axe d'élément de raccordement dans une direction à distance du mur de montage, comprend une zone d'extrémité proximale (10), prévue avec l'ouverture d'insertion, une zone d'intermédiaire (11) et une zone d'extrémité distale (12),
dans lequel un diamètre interne (D1) de la paroi tubulaire dans la zone d'extrémité proximale et la zone d'extrémité distale est égal ou supérieur à un diamètre externe (D2) de l'élément de saillie, dans lequel la zone intermédiaire est prévue avec des fentes (13) s'étendant parallèlement à l'axe d'élément de raccordement, les fentes divisant la paroi tubulaire dans la zone intermédiaire en des multiples segments de paroi allongés, les segments de paroi allongés (14) étant réalisés avec un matériau élastique,
dans lequel une épaisseur de paroi radiale (t) des segments allongés est choisie de sorte que :
lorsque l'élément de saillie n'est pas inséré dans l'élément de raccordement, un diamètre interne (D3) de la paroi tubulaire dans la zone intermédiaire est inférieur au diamètre externe (D2) de l'élément de saillie, alors que :
lorsque l'élément de saillie est inséré dans l'espace d'insertion, les segments allongés sont poussés vers l'extérieur dans la direction radiale par l'élément de saillie, dans lequel un diamètre externe (D4) des segments est égal à un diamètre externe (D5) de la paroi tubulaire dans la zone d'extrémité proximale et la zone d'extrémité distale, dans lequel la paroi tubulaire a une surface de contact externe à diamètre constant, lorsqu'elle est observée le long de l'axe d'élément de raccordement (C), dans lequel la surface externe met en prise le corps pouvant être fixé au mur par serrage.

2. Élément de raccordement (1) selon la revendication 1, dans lequel la longueur (L1) de la zone intermédiaire (11) est de 1 à 10 cm, de préférence de 2 à 6 cm, encore de préférence de 3 à 5 cm.

3. Élément de raccordement (1) selon la revendication 1 ou 2, dans lequel la longueur (LTB) du corps tubulaire est de 1 à 15 cm, de préférence de 3 à 10 cm, encore de préférence de 5 à 9 cm, de manière préférée entre toutes de 8 cm.

4. Élément de raccordement (1) selon l'une quelconque des revendications précédentes, dans lequel le corps tubulaire allongé a une forme cylindrique.

5. Élément de raccordement (1) selon l'une quelconque des revendications précédentes, dans lequel la quantité de fentes (13) est de 3 à 8, de préférence de 4 à 6, de manière préférée entre toutes de 6, dans lequel les fentes sont régulièrement réparties dans la direction circonférentielle.

6. Élément de raccordement (1) selon l'une quelconque des revendications précédentes, dans lequel la zone d'extrémité proximale (10) est prévue avec une bride (15) s'étendant perpendiculairement à l'axe d'élément de raccordement.

7. Élément de raccordement (1) selon la revendication 6, dans lequel la bride fait saillie par rapport à la zone d'extrémité proximale sur une distance de 1 à 5 mm, telle que de 2 à 4 mm, par exemple 3 mm.

8. Élément de raccordement (1) selon l'une quelconque des revendications précédentes, dans lequel les zones d'extrémité proximale et distale du corps tubulaire ont un diamètre externe (D5) de 1 à 3 cm, de préférence de 1,4 à 2,6 cm, de manière préférée entre toutes de 2,2 cm.

9. Élément de raccordement (1) selon l'une quelconque des revendications précédentes, dans lequel la circonférence externe de la zone d'extrémité proximale est prévue avec une pluralité de nervures (16) s'étendant parallèlement à l'axe d'élément de raccordement, les nervures étant régulièrement réparties dans la direction circonférentielle.

10. Élément de raccordement (1) selon l'une quelconque des revendications précédentes, dans lequel la largeur des fentes est d'approximativement 1 à 3 mm, par exemple 2 mm.

11. Sous-ensemble (17) d'un corps pouvant être fixé au mur (2) et d'un élément de raccordement (1) selon l'une quelconque des revendications précédentes, l'élément de raccordement étant reçu dans le trou allongé (3) du corps pouvant être fixé au mur.

12. Sous-ensemble (17) selon la revendication 11, dans lequel le corps pouvant être fixé au mur (2) est une étagère flottante (2) ayant une surface de support principale (18) pour supporter des objets et une ou plusieurs surfaces latérales (19), dans lequel le trou allongé (3) est prévu dans l'une des surfaces latérales, l'élément de raccordement étant reçu dans le trou allongé.

13. Sous-ensemble (17) selon la revendication 12, dans lequel la surface latérale est prévue avec une pluralité de trous allongés (3), tels que 2, régulièrement espacés sur la surface latérale, pour recevoir l'intérieur de ces derniers une pluralité d'éléments de raccordement (1).

14. Ensemble mural (20) d'un support mural (4) prévu avec un élément de saillie allongé (5) faisant saillie à distance d'un mur de montage le long d'un axe d'élément de saillie (P), et un sous-ensemble (17) selon l'une quelconque des revendications 11 à 13, l'élément de saillie (5) étant inséré dans l'espace d'insertion (S) de l'élément de raccordement (1), dans lequel la surface externe de l'élément de raccordement met en prise le corps pouvant être fixé au mur par serrage.

15. Ensemble mural (20) selon la revendication 14, dans lequel le corps pouvant être fixé au mur (2) est prévu avec une pluralité de corps allongés, tels que 2, recevant une pluralité d'éléments de raccordement à l'intérieur de ces derniers, et une pluralité d'éléments de saillie allongés étant insérés dans la pluralité d'éléments de raccordement.

16. Procédé pour monter un corps pouvant être fixé au mur (2) sur un support mural (4) sur un mur de montage (6), le corps pouvant être fixé au mur comprenant un corps allongé (3) pour recevoir un élément de raccordement (1) selon l'une quelconque des revendications 1 à 10, le support mural étant prévu avec un élément de saillie allongé (5) faisant saillie à distance du mur de montage le long d'un axe d'élément de saillie (P), l'élément de saillie pouvant être inséré dans l'espace d'insertion (S) de l'élément de raccordement par le biais de l'ouverture d'insertion (7), comprenant les étapes consistant à :
insérer la zone d'extrémité distale (12) de l'élément de raccordement dans le trou allongé du corps pouvant être fixé au mur jusqu'à ce que la zone d'extrémité proximale (10) soit complètement insérée dans le trou allongé, pour obtenir un sous-ensemble (17) selon l'une quelconque des revendications 11 à 13,
insérer l'élément de saillie allongé (5) dans l'espace d'insertion (S) de l'élément de raccordement (1) du sous-ensemble (17) par le biais de l'ouverture d'insertion (7),
déplacer le sous-ensemble (17) dans la direction du mur (6) sur l'élément de saillie jusqu'à ce qu'un ajustement ferme soit fourni entre l'élément de saillie et le support mural d'une part et le sous-ensemble (17) d'autre part, pour obtenir l'ensemble mural (20) selon la revendication 14 ou 15, dans lequel la surface externe de l'élément de raccordement met en prise le corps pouvant être fixé au mur par serrage.
